# EUROPÄISCHE PATENTSCHRIFT

(11) **EP 0 906 795 B1**
(45) Veröffentlichungstag und Bekanntmachung des Hinweises auf die Patenterteilung: **28.02.2001**
(21) Anmeldenummer: 97117027.9
(22) Anmeldetag: 01.10.1997
(51) Int. Cl.: B09B 1/00, E04H 17/08

(54) **Standortveränderliche Fangzaunvorrichtung**
Mobile catch-fence
Clôture d'arrêt mobile

(43) Veröffentlichungstag der Anmeldung: 07.04.1999
(73) Patentinhaber: Thiel, Johannes, Dr., 99518 Bad Sulza (DE)
(72) Erfinder: Thiel, Johannes, Dr., 99518 Bad Sulza (DE)
(74) Vertreter: Liedtke, Klaus, Dr.

(56) Entgegenhaltungen:
- DE-A- 19 617 311
- GB-A- 407 462
- GB-A- 1 048 439
- GB-A- 2 073 802
- GB-A- 2 278 374
- GB-A- 2 278 862

## Beschreibung

Die Erfindung betrifft eine standortvcränderbarc Fangzaunvorrichtung für die Leichtgutlagerung mit Stand- und Spannelementen und mindestens einem seitlich angeordnetem Netz, vorzugsweise zum Einsatz auf Mülldeponien.

Bei der Leichtgutlagerung, insbesondere auf Müllkippen und Mülldeponien, Sortieranlagen oder vergleichbaren Lagerstätten ist es erforderlich, diese durch Fangzaunanordnungen zum Auffangen von durch Wind getragenen Stoffen, wie Papier, Kunststoff, Folien und dergleichen zu sichern.

Im Stand der Technik ist es bekannt, neben ortsfesten Fangzaunanordnungen auch standortveränderliche Fangzaunanordnungen einzusetzen.
In EP 0 336 008 A1 ist eine Fangzaunanordnung angegeben, die aus einem Masseblock aus Beton besteht, der flächig ausgebildet ist und dessen Bodenseite am Rand einer Müllkippe transportierbar und dort verankerbar ist. Der Masseblock trägt eine schwenkbare Mastanordnung, die an ihrem Oberende einen Rand eines Netzes haltert, das am Unterende über Heringe im Erdboden verankert ist.

Bei dieser Anordnung ist nachteilig, daß sie ein masscintensives flächiges Fundament erfordert, welches mit Heringen oder ähnlichen Befestigungsmitteln zusätzlich im Erdboden verankert werden muß. Durch diesen masscintensiven Fundamentblock erschweren derartige Fangzaunanordnungen das bei Mülldeponien häufig erforderliche Umsetzen, außerdem sind sie auf geschütteten Untergründen nur bedingt einsetzbar.

Nach DE 196 17 311 A1 ist ein Stand- und Spannelement für eine standortveränderliche Fangzaunvorrichtung bekannt, bei der das Stand- und Spannelement einen in der Länge verstellbaren Mast und zwei mit dem Mast verbundene Stützen enthält und der Mast mit den Stützen im oberen Bereich der Stützen mit einem Gelenk verbunden ist. Diese Anordnung ist für die Befestigung von senkrecht oder nahezu senkrecht angeordneten Netzen geeignet.

Bei den im Stand der Technik bekannten Fangzaunvorrichtungen ist nachteilig, daß sie nur einen begrenzten Schutz ermöglichen. Insbesondere bei stärkerem Wind werden die Lcichtguttcilc aus dem geschützten Bereich getragen. Zur Abhilfe wurde versucht, durch möglichst hohe Fangzaunanordnungen eine hohe Sicherheit zu gewährleisten. Die verursacht jedoch wiederum eine Vergrößerung der aufzunehmenden Windlast, so daß entweder eine verringerte Standsicherheit oder eine Vergrößerung der Abmessungen und der Masse der Standelemente erforderlich sind, wodurch das Umsetzen der Zaunanlage erschwert wird.

Der Erfindung liegt die Aufgabe zugrunde, eine Fangzaunvorrichtung der eingangs genannten Art anzugeben, die einen möglichst hohen Schutz des Leichtgutes gegen Austreten aus dem vorgesehenen Raum gewährleistet, schnell umgesetzt werden kann, unterschiedlichen Gegebenheiten leicht angepaßt, auf geschüttete Untergründe gestellt werden kann, und die hohen Windlasten standhält.

Erfindungsgemäß gelingt die Lösung der Aufgabe mit den kennzeichnenden Merkmalen von Patentanspruch 1.

Vorteilhafte Weiterbildung des erfindungsgemäßen Stand- und Spannelementes sind in den Ansprüchen 2 bis 5 angegeben.

Die erfindungsgemäße Fangzaunvorrichtung zeichnet sich gegenüber dem im Stand der Technik bekannten Fangzaunvorrichtungen durch eine Reihe von Vorzügen aus.

Hierzu zählen insbesondere die wesentlich vollständige Sicherung des deponierten Leichtgutes, die erleichterte Aufstellung sowie die einfache Standortveränderung, die nur einfache Hilfsmittel erfordert.

Das zur Erfindung gehörende Stand- und Spannelement kann dem Bodenprofil leicht und in weiten Bereichen angepasst werden. Das Gesamtsystem kann auf geneigtem Gelände, wie Böschungen und Dämmen, sowie bei ungünstigen Untergrundverhältnissen, bei denen eine hohe Verdichtung nicht gegeben ist, aufgestellt werden. Da die Kraftverteilung in einem Dreiblock wesentlich geringer ist als bei einer einzelnen Mastkonstruktion, kann die Dreibockkonstruktion größere Windlasten aufnehmen.
Die erfindungsgemäße Fangzaunanordnung gestattet es, mit vergleichsweise geringem Materialaufwand die aufgrund der Wind- und ähnlichen Belastungen erforderlichen statischen Anforderungen zu gewährleisten ohne daß eine Verankerung mittels Heringen und der damit erforderliche Aufwand erforderlich ist.

Die Erfindung wird im folgenden anhand von Ausführungsbeispielen näher erläutert. In den zugehörigen Zeichnungen zeigen:
Figur 1 eine Fangzaunanordnung mit einem Standelement in Form eines teleskopierbaren Dreibockgestells und
Figur 2 ein Stand- und Spannelement auf Transportschlitten.

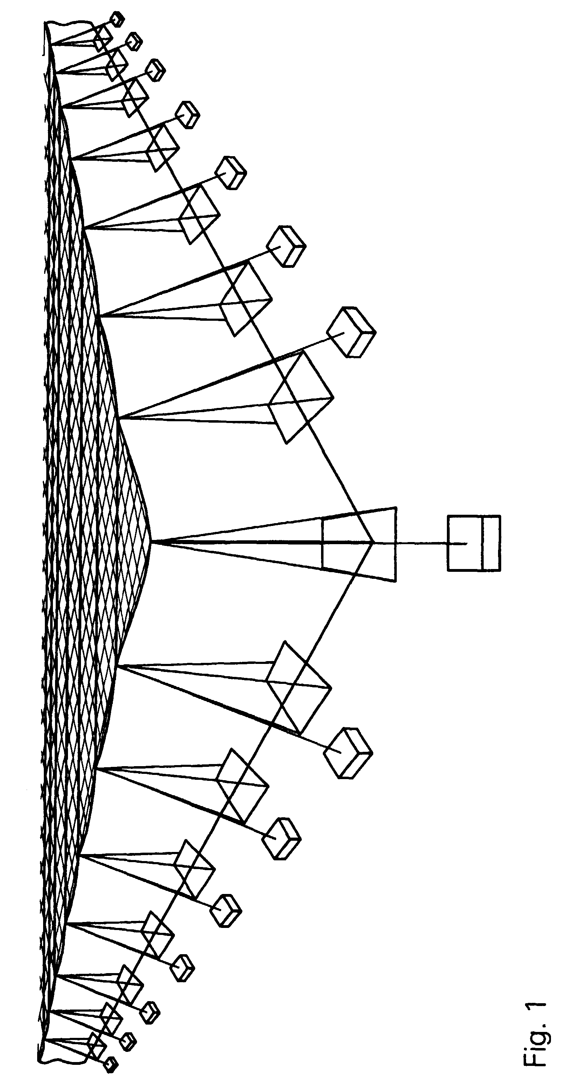

Figur 1 gibt eine Übersicht über eine standortveränderliche Fangzaunvorrichtung mit Deckelung

Die Fangzaunanordnung besteht aus den Stand- und Spannelementen, die mit Stahlseilen verbunden sind und an denen Seitennetze 2, als auch Decknetze 16 befestigt werden.
Zum Abspannen der Führungsseile 13 des Decknetzes 16 werden diese über die Stand- und Spannelemente auf Masse und/oder Anker geführt.
Das Abspannen der Decknetzseile erfolgt ausschließlich an den Längsseiten der Fangzaunanlage.
Die Vorderseite und Hinterfront kann partiell zum Beschicken geöffnet werden.

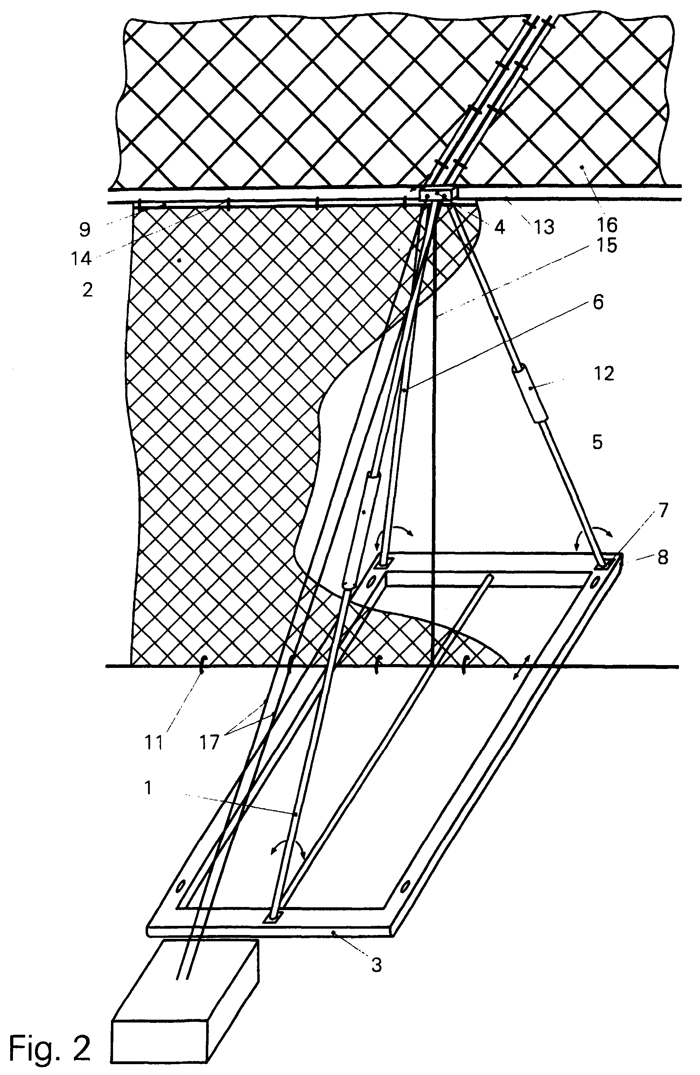

Figur 2 erläutert ein Beispiel für ein Stand und Spannelement, das einen rechteckförmigen Metallrahmen 3 enthält. An dem Rahmen 3 sind der Mast 1 und die Stützen 6 jeweils an einem Rahmengelenk 7 angeordnet. Mast 1 und Stützen 6 sind im oberen Bereich mit dem Gelenk 4 verbunden und bilden dabei eine stabile, stativähnliche Stützkonstruktion, die das Fangnetz 2 umhaust. Die Längenverstellung 5 des Mastes 1 gewährleistet eine Verstellung der Neigung. Damit kann die Stützvorrichtung an die Gegenseite des Geländes angepaßt werden. Diese Gestaltung kann die Belastungskräfte auf den Untergrund übertragen, ohne daß hohe Kippmomente auftreten. Dadurch wird die Aufnahme hoher Belastungen ohne zusätzliche Bodenverankerungen möglich. Zur Stabilisierung zwischen den Dreiböcken wird am oberen Mastende am Gelenk 4 ein Stahlseil 13 zur Erhöhung der Stabilität gespannt. An dem Stahlseil 13 wird auch die obere Randkordel 9 des Seitennetzes 2 befestigt. Das untere Ende des Fangnetzes 2 wird entweder im Erdboden mit Hilfe von Erdankern 11 verankert und/oder am Rahmen 3 des Unterteiles befestigt.

Zur Befestigung des Netzes dienen Befestigungsseile, die zwischen den Gelenken 4 und dem Boden bzw. dem Rahmen 3 verstellbar angebracht sind. Das Fangnetz 2 wird über unterschiedlich lange Befestigungselemente 14 am Stahlseil 13 eingehängt.

Die erfindungsgemäße Fangzaunanordnung ermöglicht eine Anpassung an verschiedene Neigungen des Standortes. Die Anpassung erfolgt einerseits durch die beschriebene Längenverstellungen 5 des Mastes 1, was eine Veränderung des oberen Aufhängepunktes bewirkt und andererseits durch eine Veränderung der Befestigungen des seitlichen Fangnetzes 2 durch Längsverschiebung am Rahmen 3. Außerdem kann mit Hilfe unterschiedlich langer Befestigungselemente 14 der Abstand zwischen Netz und Stahlseil variiert werden.

Die Umhausung des Fangnetzes 2 durch Mast und Stützen 6 ist für die Statik besonders vorteilhaft, da das Fangnetz 2 von dem teleskopartig verstellbaren Mast 1 und den Stützen 6 mit Längenverstellung 12 umgeben ist. Am Rahmen 3 sind ferner Anschlagösen angebracht, an die Seile zum Transportieren eingehängt werden können.

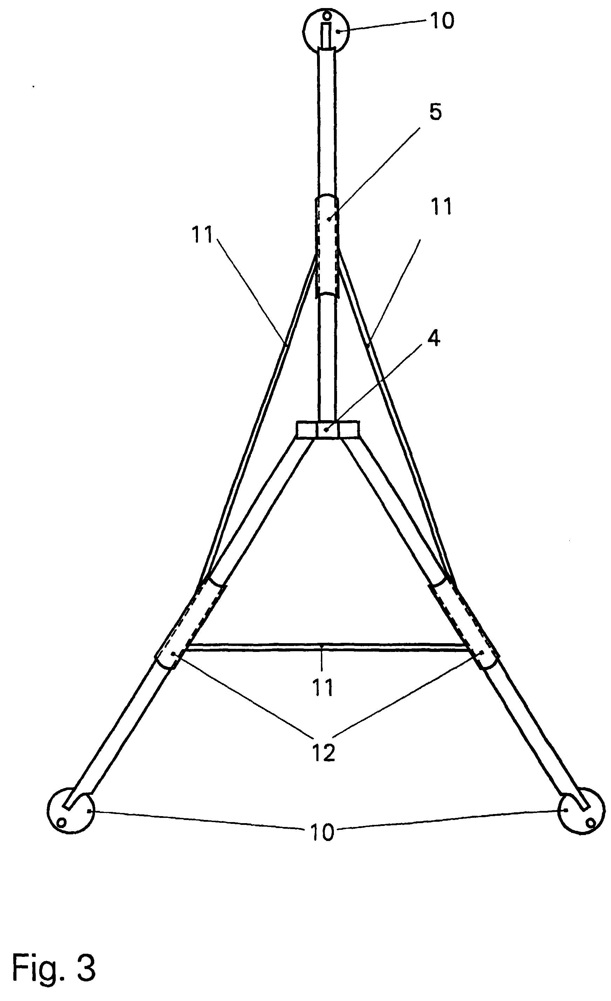

Figur 3 erläutert eine Ausführungsform, bei der der höhenverstellbare Mast 1, eine höhenverstellbare Stütze 6 und eine weitere hier nicht dargestellte Stütze mit dem Gelenk 4 im oberen Bereich verbunden sind. Im unteren Bereich befinden sich an dem Mast 1 und den Stützen 6 gleitschuhartige Grundplatten 10. Diese kommen bei besonderen unebenen Geländeabschnitten zum Einsatz. Das Fangnetz 2 ist an einem Seil befestigt, das zwischen den Gelenken 4 der Dreiböcke gespannt ist, befestigt und bodenseitig mit Erdankern 11 im Untergrund fixiert.

Es sind auch Ausführungen möglich, bei denen nur über den Mast 1 der Neigungswinkel verändert werden kann. Diese vereinfachte Konstruktion eignet sich für relativ ebene Geländeabschnitte.

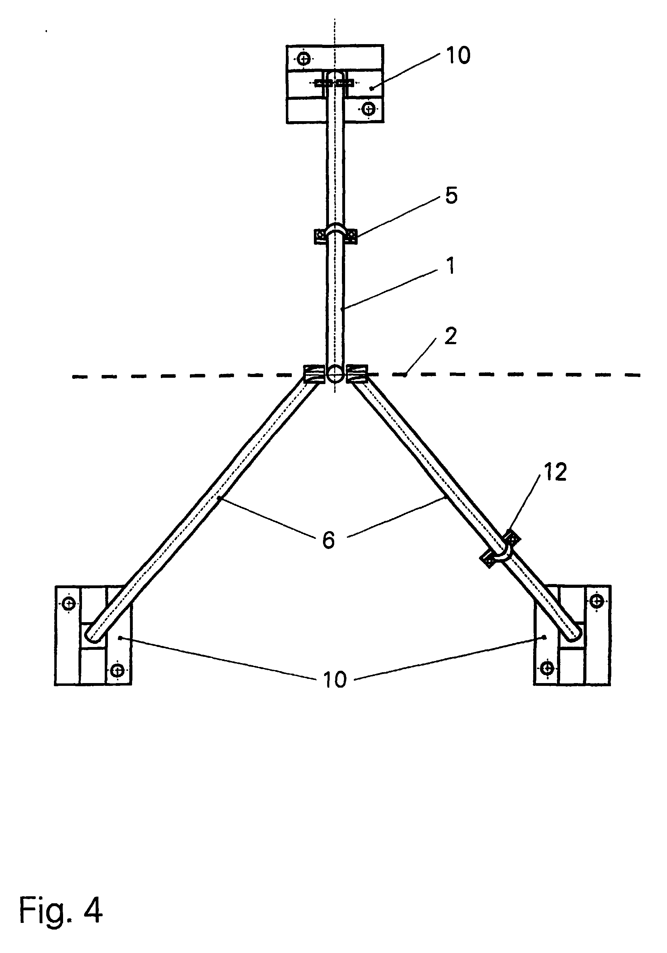

In Figur 4 ist eine Ausführungsform dargestellt, bei der durch Bohrungen in den Bodenplatten Anker geschlagen werden können, die zu einer Erhöhung der Stabilität des Elements führen.

### BEZUGSZEICHENLISTE

- 1: Mast
- 2: seitliches Fangnctz
- 3: Rahmen
- 4: Gelenk
- 5: Längenverstellung des Mastes
- 6: Stütze
- 7: Rahmengelenk
- 8: Kufenförmige Rundung
- 9: Randkordel des Netzes
- 10: Grundplatten
- 11: Erdanker
- 12: Längenverstellung der Stütze
- 13: Stahlseil
- 14: Befestigungselement
- 15: Befestigungsseil
- 16: Deckennetz
- 17: Stahlseil für Deckennetz

## Patentansprüche

1. Standortveränderbare Fangzaunvorrichtung für die Leichtgutlagerung mit Stand- und Spannelementen und mindestens einem seitlich angeordnetem Netz, vorzugsweise zum Einsatz auf Mülldeponien, wobei die Fangzaunvorrichtung oberhalb des zu sichernden Raumes mit Spannseilen und mindestens einem Decknetz (16) versehen ist, das bis an die Seitennetze (2) reicht, so dass die gesamte Anlage von Netzen (2,16) umhaust ist und bei dem die Decknetze (16) und die Seitennetze (2) an Stahlseilen befestigt sind, die mit den Stand- und Spannelementen verbunden sind, **dadurch gekennzeichnet,**
- dass die Stand- und Spannelemente einen Ständer und einen in der Länge verstellbaren Mast (1) sowie zwei mit dem Mast (1) verbundene Stützen (6) enthalten, wobei der Mast (1) und die Stützen (6) im oberen Bereich mit einem Kuppelgelenk (4) verbunden sind und im unteren Bereich gelenkig am Ständer angeordnet sind und mindestens eine der Stützen (6) eine Vorrichtung zur Längenverstellung (12) enthält und
- dass im unteren Bereich des Kuppelgelenks (4) eine Einrichtung zur Befestigung eines Stahlseiles für ein Seitennetz und zwei Führungen für die Stahlseile der Deckennetze (16) angeordnet sind

2. Fangzaunanordnung nach Anspruch 1, **dadurch gekennzeichnet**, dass an den Decknetzen (16) und an den Seitennetzen (2) Mittel angebracht sind, die ein partielles Öffnen der Netze ermöglichen.

3. Fangzaunanordnung nach Anspruch 1 oder 2, **dadurch gekennzeichnet**, dass die Decknetze mit Hilfe von Stahlseilen (17) mit Bodenankern (18) und/oder Masseblöcken verbunden sind.

4. Fangzaunanordnung nach einem der vorhergehenden Ansprüche, **dadurch gekennzeichnet**, dass in der pyramidenähnlichen Spitze aus Mast (1) und Stützen (6) am Mast ein Stahlseil (13) zur Stabilisierung zwischen den Dreiböcken und/oder zu einem zusätzlichen Spannelement gespannt ist.

5. Fangzaunanordnung nach einem der vorhergehenden Ansprüche, **dadurch gekennzeichnet**, dass das Kuppelgelenk (4) mit einem Gelenkbolzen und die Stützen (6) mit Lagerbuchsen versehen sind, welche jeweils so abgewinkelt sind, dass der Mast (1) in der Nichtgebrauchsstellung des Stand- und Spannelementes zwischen den Stützen (6) gelagert werden kann.

## Claims

1. Retention fence device with a movable location for the storage of leight-weight material with standing and tensioning elements, and with at least one side-mounted net, preferably for use on sanitary landfills, while the retention fence device, above the room to be secured, has to be provided with tensioning ropes and with at least one cover net (16) that reaches up to the side nets (2), so that the entire installation is surrounded and housed by nets (2,16), and in which the cover nets (16) and the side nets (2) are fixed to steel cables which are linked to the standing and tensioning elements, **characterized in that**
- the standing and tensioning elements comprise a stand, and a pole (1) adjustable for length, as well as two braces (6) linked to the pole (1), while the pole (1) and the braces (6) are linked to a coupling joint (4) in the upper part, and while they are arranged in an articulated way at the stand in the lower part, and while at least one of the braces (6) contains a device for longitudinal adjustment (12), and in that
- a fixture for fixing a steel cable for one side net and two guides for the steel cables of the cover nets (16) are located in the lower part of the coupling joint (4).

2. Retention fence arrangement as claimed in claim 1, **characterized in that** means which allow a partial opening of the nets are mounted on the cover nets (16) and on the side nets (2).

3. Retention fence arrangement as claimed in claim 1 or 2, **characterized in that** the cover nets are linked by means of steel cables (17) to ground anchors (18) and/or weight blocks

4. Retention fence arrangement as claimed in any of the above-mentioned claims, **characterized in that** a steel cable (13) is tensioned at the pole in the top which is similar to the shape of a pyramid, and which is made of pole (1) and braces (6), for stabilization and/or to an additional tensioning element.

5. Retention fence arrangement as claimed in any of the above-mentioned claims, **characterized in that** the coupling joint (4) is provided with one joint pin, and in that the braces (6) have bearing bushes which are angled in such a corresponding way that the pole (1) can be supported between the braces (6) when the standing and tensioning element is not in its working position.

## Revendications

1. Dispositif déplaçable à clôture de retenue pour le dépôt de matériaux légers, à éléments statiques et de tension et au moins un filet disposé latéralement, pour un usage préférentiel sur des décharges de déchets, ledit dispositif à clôture de retenue étant pourvu au-dessus de l'espace à assurer de câbles de tension et d'au moins un filet de couverture (16), lequel s'étend jusqu'au filets latéraux (2), de manière à envelopper l'ensemble de l'installation par les filets (2,16), les filets de couverture (16) et les filets latéraux (2) étant fixés sur câbles d'acier reliés aux éléments statiques et de tension, **caractérisé en ce que**
- les éléments statiques et de tension se composent d'un montant et d'un mât (1) réglable en longueur ainsi que de deux supports (6) raccordés au mât (1), ledit mât (1) et les supports (6) étant en haut reliés par une articulation couplée (4) et articulés en bas sur le montant, un des supports (6) au moins comprenant un dispositif de réglage en longueur (12)
- un mécanisme de fixation d'un câble d'acier pour un filet latéral et deux guidages pour les câbles acier du filet de couverture (12) sont disposés en bas de l'articulation couplée (4).

2. Dispositif à clôture de retenue selon revendication 1, **caractérisé en ce que** des éléments rendant possible une ouverture partielle des filets sont appliqués sur les filets de couverture (16) et les filets latéraux (2).

3. Dispositif à clôture de retenue selon revendication 1 ou 2, **caractérisé en ce que** les filets de couverture sont reliés par des câbles d'acier (17) aux ancrages de sol (18) et/ou des blocs de masse.

4. Dispositif à clôture de retenue selon l'une des revendications précédentes, **caractérisé en ce qu'**un câble d'acier (13) est tendu sur le mât, à l'intérieur de la pointe pyramidale formée par le mât (1) et les supports (6), aux fins de stabilisation entre les trois appuis et/ou pour l'obtention d'un élément supplémentaire de tension.

5. Dispositif à clôture de retenue selon l'une des revendications précédentes, **caractérisé en ce que** l'articulation couplée (4) est pourvue d'un axe d'articulation, et les supports (6) de coussinets, pliables selon un angle tel que le mât (1) peut être logé entre les supports (6) en position de non-utilisation de l'élément statique et de tension.
